# EUROPEAN PATENT APPLICATION

(11) **EP 4 711 213 A1**
(43) Date of publication of application: **18.03.2026**
(21) Application number: 25201653.0
(22) Date of filing: 11.09.2025
(51) Int. Cl.: B60R 22/18, B60R 22/26, B60R 22/32

(54) **SEAT RESTRAINT SYSTEM**

(30) Priority: 11.09.2024 US 202463693401 P
(71) Applicant: Eaton Intelligent Power Limited, Dublin 4, D04 Y0C2 (IE)
(72) Inventor: HAACK, Scott, Dublin, D04 Y0C2 (IE); BERKENBOSCH, Lyle J., Dublin, D04 Y0C2 (IE); GANEY, Brandon, Dublin, D04 Y0C2 (IE); LONG, Joshua, Dublin, D04 Y0C2 (IE); SHEPHERD, Michael, Dublin, D04 Y0C2 (IE)
(74) Representative: Jolliffe, Jack Louis

(57) **Abstract**

A seat restraint system (110) holds a user to a seating rig (100) using multiple restraints (112). These restraints can be released simultaneously using a release actuation system (140), thereby quickly freeing the user from the seating rig. Certain types of restraints are extendable relative to the seating rig between retracted and extended positions to facilitate freedom of movement of the user. The release actuation system allows the restraints to extend without unintentional actuation of the release mechanism (130). The release actuation system allows the restraints to be released regardless of the position (e.g., retracted, extended, therebetween) of the extendable restraints.

## Description

### BACKGROUND

It is known to equip a vehicle with a seat restraint system to hold a user to a seat of the vehicle. The seat restraint system maintains the user in the seat during movement of the vehicle. Certain vehicles (e.g., race cars, helicopters, etc.) tend to have robust restraint systems including multiple restraints. For example, the restraint system can include not only a releasable lap belt, but also a releasable shoulder strap. In certain cases, the user may need to swiftly exit the vehicle (e.g., in the event of a crash). Accordingly, it may be advantageous to release multiple restraints simultaneously.

### SUMMARY

A seat restraint system holds a user to a seating rig using multiple restraints. These restraints can be released simultaneously using a release actuation system.

In accordance with certain aspects of the disclosure, certain types of restraints are extendable relative to the seating rig between retracted and extended positions to facilitate freedom of movement of the user. In certain examples, the release actuation system allows the restraints to extend without unintentional actuation of the release mechanism. In certain examples, the release actuation system allows the restraints to be released regardless of the position (e.g., retracted, extended, therebetween) of the extendable restraints.

In accordance with certain aspects of the disclosure, the restraints include buckles tethered to the seating rig and latching plates tethered or otherwise attached to wearable equipment (e.g., a vest). Accordingly, the weight of the buckles is not borne by the user. Further, the equipment straps tethering the latching plates can be pre-positioned on the vest (e.g., in an optimal configuration) and fixed in place.

In accordance with certain aspects of the disclosure, the release actuation system includes an actuation cable for each restraint (e.g., for each buckle). Each actuation cable includes an inner wire slidable within an outer sheath (e.g., a push/pull cable). One end of each actuation cable attaches to an actuator while the opposite end attaches to a release mechanism of the buckle. Operation (e.g., movement) of the actuator moves the inner wires of each actuation cable to simultaneously actuate the release mechanisms of the buckles.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a perspective view of an example seat restraint system including restraints between a vest and a seating rig, the seat restraint system also including a release actuation system.
FIG. 2 shows a first part of the seat restraint system of FIG. 1, the first part including an example vest having tethered latching plates.
FIG. 3 shows a second part of the seat restraint system of FIG. 1, the second part including a seating rig, tethered buckles, and an example release actuation system.
FIG. 4 is a first perspective view of an example tethered buckle suitable for use with the seat restraint system of FIG. 1.
FIG. 5 is a second perspective view of the tether buckle of FIG. 4.
FIG. 6 is a cross-sectional view of the tethered buckle of FIG. 5 taken along the 6-6 line of FIG. 5.
FIG. 7 shows an example actuator including an interface member by which two or more of the restraints of the seat restraint system of FIG. 1 can be released simultaneously.
FIG. 8 illustrates an example implementation of the actuator of FIG. 7.
FIG. 9 shows a cable payout arrangement for the release actuation system, the cable payout arrangement enabling extension and retraction one or more restraints without releasing the restraints.
FIG. 10 is an exploded view of a cable spool of the cable payout arrangement of FIG. 9.
FIG. 11 shows excess length of actuator cables of the release actuation system stored within the cable payout arrangement of FIG. 9.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

A seat restraint system 110 in accordance with the principles of the present disclosure, enables simultaneous release of a plurality of the restraints 112 between a user and a seating ring 100. In certain examples, the seat restraint system 110 enables the simultaneous release of all of the restraints 112 between the user and the seating ring 100. In certain implementations, the restraints 112 include buckled straps. First ends of the buckled straps attach to the seating rig 100 and second ends of the buckled straps attach to a vest 120 or other piece of equipment worn by the user.

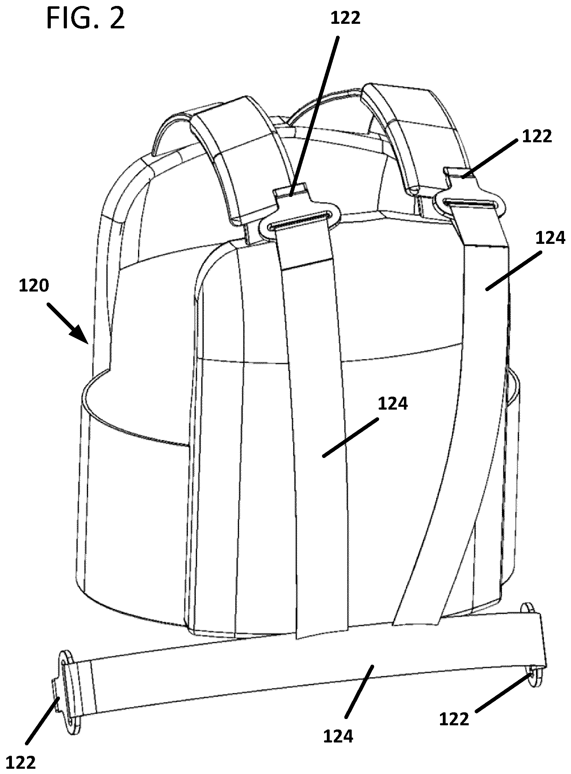

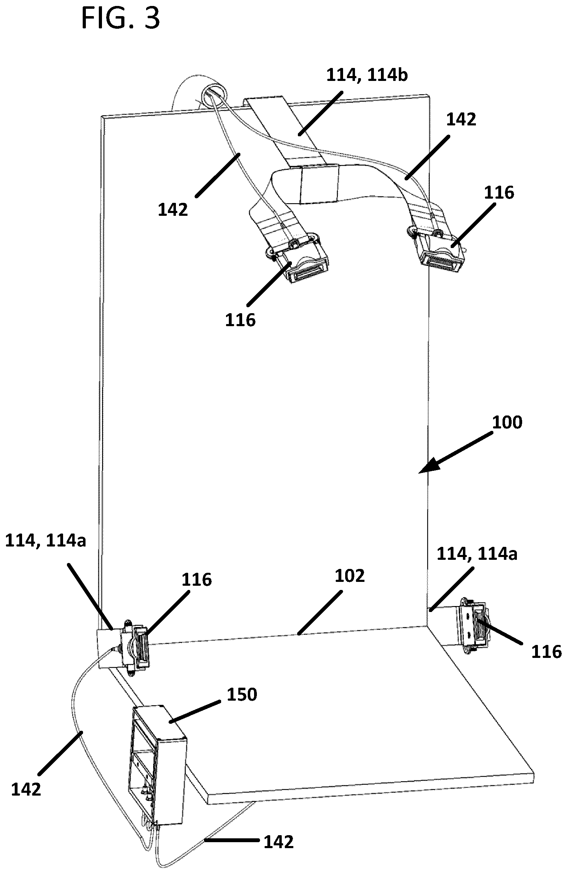

For example, the seating rig 100 may include a seat 102 and a plurality of first straps 114 (e.g., see FIG. 3). A first end of each first strap 114 is attached to the seat 102 and an opposite second end of each first strap 114 is attached to a respective buckle 116. The vest 120 includes a plurality of latch plates 122 that are each configured to be inserted into and held by a respective one of the buckles 116. The latch plates 122 are non-removably attached to the vest 120 so that the latch plates 122 cannot be removed from the vest 120 without breaking the seat restraint system 110. In certain examples, the latch plates 122 are tethered to the vest 120 by second straps 124. In certain examples, the second straps 124 forms a four-point harness with the vest 120 (e.g., see FIG. 2).

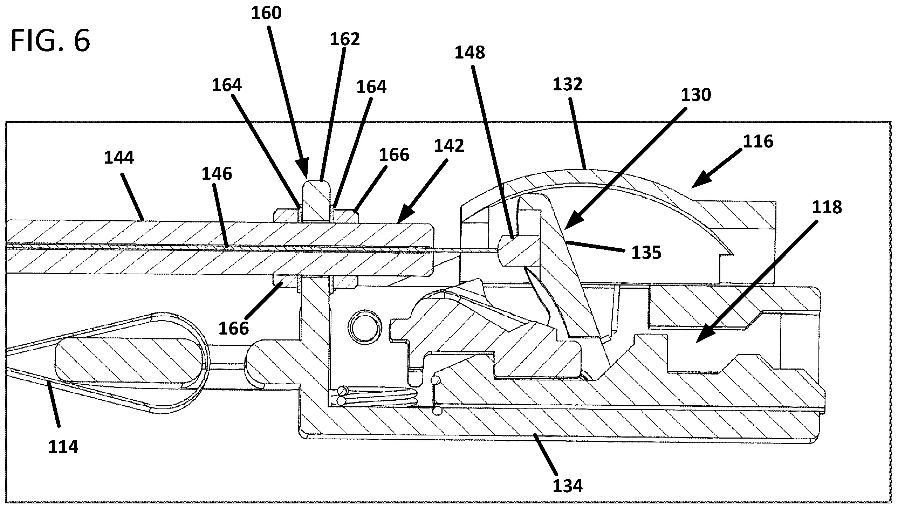

Each buckle 116 includes a respective latch 118 configured to receive and hold a respective one of the latch plates 122 when the latch plate 122 is inserted into the buckle 116 (e.g., see FIG. 6). Each buckle 116 also includes a respective release mechanism 130 that, when actuated, releases the latch plate 122 from the latch 118 (e.g., see FIG. 6). In certain examples, each release mechanism 130 is individually actuatable (e.g., using a grip portion 132 of a housing 134 of the buckle 116.

In certain implementations, a release actuation system 140 is configured to simultaneously actuate the release mechanisms 130 of two or more of the buckles 116. In certain implementations, the release actuation system 140 includes a plurality of actuator cables 142. Each actuator cable 142 includes an outer sheath 144 disposed around an inner wire 146. The wire 146 is sufficiently rigid to enable both pushing and pulling of the wire 146 within the sheath 144. For example, pushing on either end of the wire 146 causes the wire 146 to move axially within the sheath 144 along the direction of the push. In certain examples, pulling on either end of the wire 146 causes the wire 146 to move axially within the sheath 144 along the direction of the pull.

First ends of the actuator cables 142 are disposed at an actuator 150. Opposite second ends of the actuator cables 142 are disposed at respective buckles 116. In certain examples, the outer sheath 144 of each actuator cable 140 is attached to the body 134 of the respective buckle 116 at a mounting station 160. The inner wire 146 extends through the outer sheath 144, past the mounting station 160, and to an actuation member 148 external of the outer sheath 144 (e.g., see FIG. 6). In an example, the actuation member 148 includes a metal ferrule or other pushing member. In certain examples, the actuation member 148 abuts or is attached to the release mechanism 130 of the buckle 116. In the example shown in FIG. 6, the actuation member 148 abuts a lever 135 of the release mechanism. Pushing on the first end of the actuator cable 142 causes the inner wire 146 to slide within the outer sheath 144 towards the buckle 116 and causes the actuation member 148 to press against the lever 135, thereby actuating the release mechanism 130. In other examples, the actuation member 148 and release mechanism 130 are configured so that pulling on the first end of the cable 142 actuates the release mechanism 130.

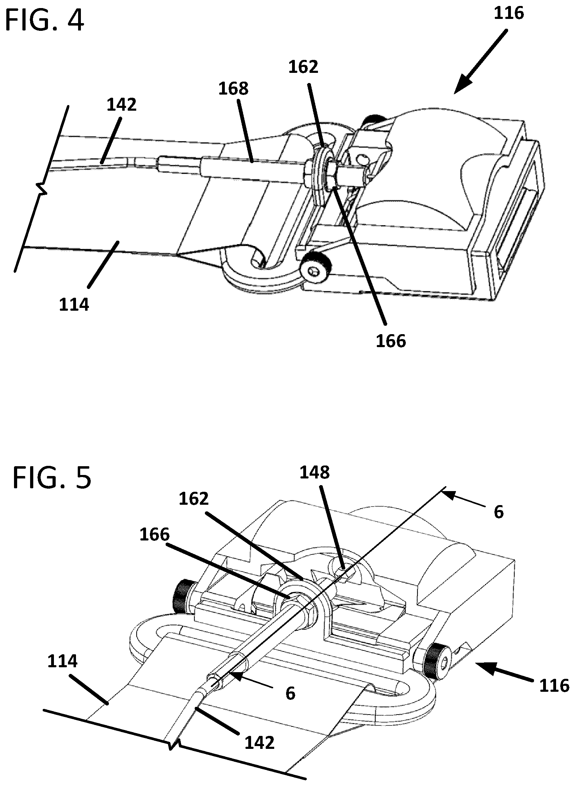

In some implementations, the actuator cable 142 is non-releasably connected to the buckle 116. For example, the actuator cable 142 can be crimped, welded, or otherwise securely attached to a mounting flange 162. In other implementations, the actuator cable 142 is releasably connected to the buckle 116 (e.g., via threading). In certain examples, a mounting sleeve 168 may be disposed over the actuator cable 142 at the second end to facilitate mounting the cable 142 securely without damaging the actuator cable 142. In the example shown in FIGS. 4-6, retaining rings 164 (e.g., washers) are secured (e.g., by crimp rings 166) to the actuator cable 142 at opposite sides of the mounting flange 162. The mounting sleeve 168 inhibits the crimp rings 166 from interfering with the sliding of the inner wire 146.

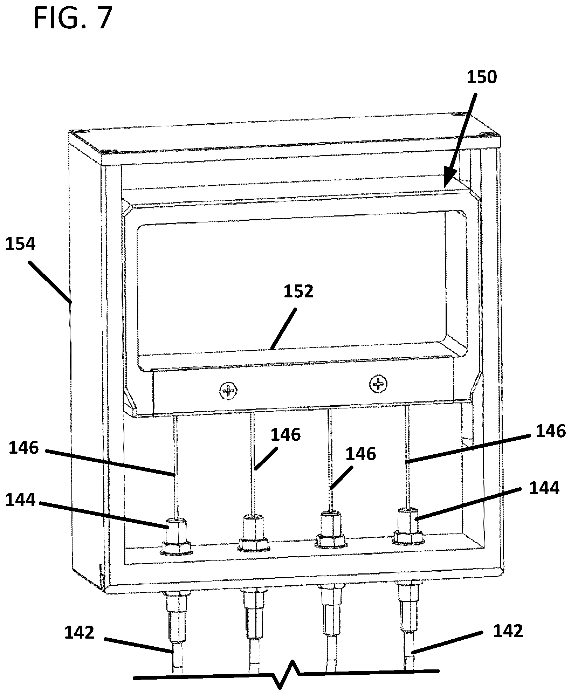

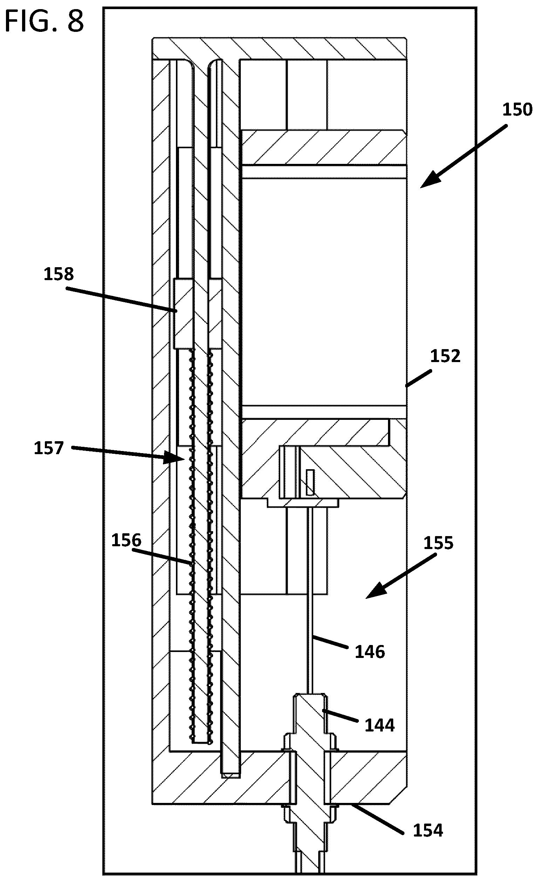

As noted above, the first ends of the actuator cables 142 are disposed at the actuator 150 (e.g., see FIGS. 7 and 8). In certain implementations, the outer sheath 144 of each actuator cable 142 is axially fixed to the actuator 150. For example, the outer sheath 144 of each actuator cable 142 may be mounted (e.g., crimped, welded, clamped, etc.) to a body 154 of the actuator 150. The inner wires 146 of each actuator cable 142 extends past the outer sheaths 144 to connect to an interface member 152 disposed within the body 154.

Accordingly, movement of the interface member 152 between a non-actuated position (e.g., undepressed) and an actuated position (e.g., depressed) translates into movement of the inner wires 146 of the actuator cables 142 relative to the outer sheath 144. In certain examples, the interface member 152 directly transfers any movement of the interface member 152 relative to the actuator body 154 to the inner wires 146 to move the inner wires 146 relative to the outer sheaths 144. For example, pushing the interface member 152 towards the outer sheaths 144 causes the inner wires 146 to slide within the outer sheaths 144 towards the release mechanisms 130 of the buckles 116. In other implementations, the interface member 152 is configured to be pulled to the actuated position.

In certain implementations, the interface member 152 is biased to a non-actuated position by one or more biasing members 156 (e.g., coil springs). For example, the biasing members 156 may extend between a portion of the actuator body 154 and a spring stop 158 of the interface member 152. In certain examples, the spring 156 can be protected within a biasing chamber 157 that is separated from a main chamber 155 in which the interface member 152 is disposed (e.g., see FIG. 8).

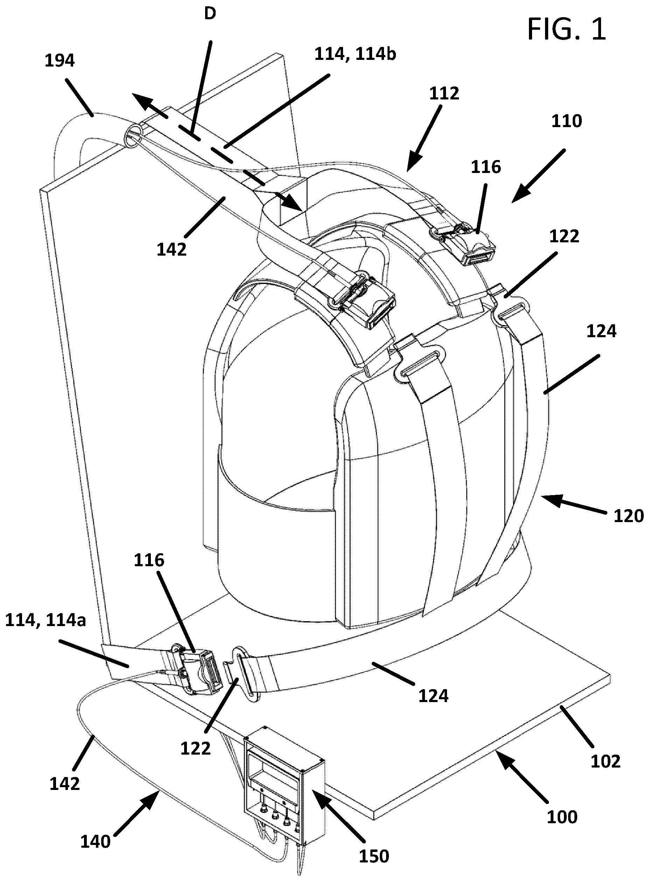

Referring back to FIG. 1, the first straps 114 allow at least some movement of the buckles 116 relative to the seating rig 100. In certain implementations, some of the first straps 114 maintain a stationary length between the seating rig 100 and the vest 120 (e.g., see straps 114a at the bottom of the seat 102). In certain implementations, other of the first straps 114 may extend relative to the seating rig 100 to enhance movement capabilities and/or comfort of the user. For example, the strap 114b at the top of the seat 102 (e.g., near a shoulder of the user) is configured to enable the vest (and hence the user wearing the vest) to pull away from the seat 102 while the restraints 112 are fastened.

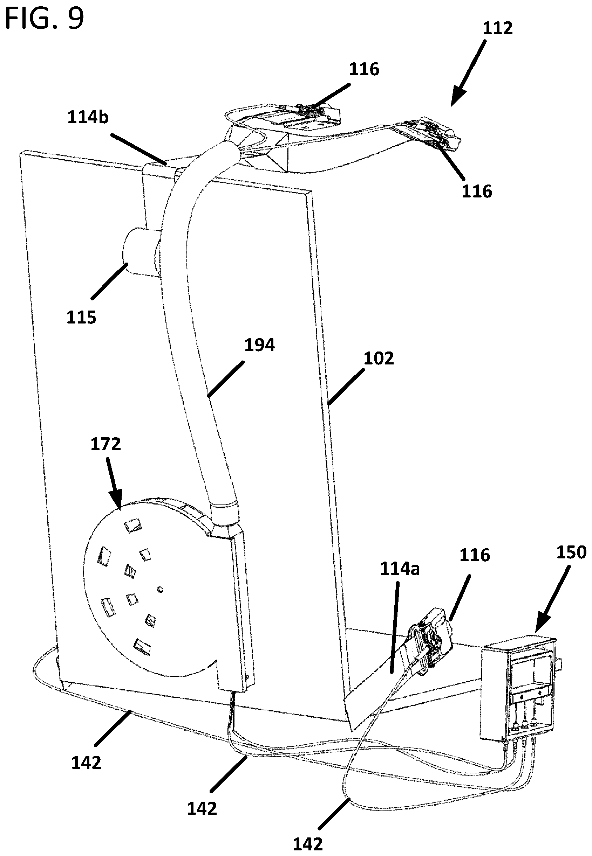

In certain examples, the strap 114b may have a coiled or otherwise stored excess 115 from which extra length of the strap 114b may be paid out. Paying out the strap 114b enables the respective buckle 116 to move from a retracted position to an extended position. When in the retracted position, the strap 114b holds the respective buckle 116 at a first distance from the seating rig 100 (e.g., at a position enabling the user to sit normally in the seat 102. When in the extended position, the buckle 116 has moved with the user away from the seating rig 100 (e.g., along a direction D extending along a longitudinal axis of the strap 114b as shown in FIG. 1). In certain examples, multiple of the straps 114b and respective buckles 116 can be moved simultaneously between the extended and retracted positions. For example, the straps 114 of two or more buckles 116 may stem from (or attach to) a common strap 114b with stored excess 115 (e.g., see FIGS. 1 and 9).

In certain implementations, the release actuation system 140 is configured to enable the buckle 116 of an extendable strap 114b to move with the strap between the extended and retracted positions without actuating the respective release mechanism 130. For example, the actuator cable 142 of each buckle 116 may also have a stored excess 170 from which extra length of the actuator cable 142 can be paid out. Accordingly, the second end of the actuator cable 142 can move with the respective buckle 116 away from the seating rig 100 when the respective strap 114b is paid out by paying out the excess 170 of the actuator cable 142. Because the second end of the actuator cable 142 is moved in its entirety (i.e., both the outer sheath 144 and the inner wire 146), movement of the buckle 116 does not move the release mechanism 130 away from the actuator member 148 and does not cause any movement between the inner wire 146 and the outer sheath 146.

In certain implementations, a cable spool 172 is configured to manage the stored excess 170 of the one or more actuator cables 142 associated with the extendable straps 114b. The cable spool 172 has an inlet 174 at which the one or more actuator cables 142 enter an interior of the cable spool 172. Excess length 170 of the actuator cables 142 coils one or more times along a storage space 176 within the spool 172 and exits the spool 172 through outlet 178. In certain examples, a drum 182 is disposed within the interior of the spool 172 to partially define the storage space 176. For example, the storage space 176 may be disposed between an outer surface of the drum 182 and an inner surface of an outer wall 184 of the spool 172. In certain examples, a radial space G between the drum 182 and the outer wall 184 varies along the storage space 176.

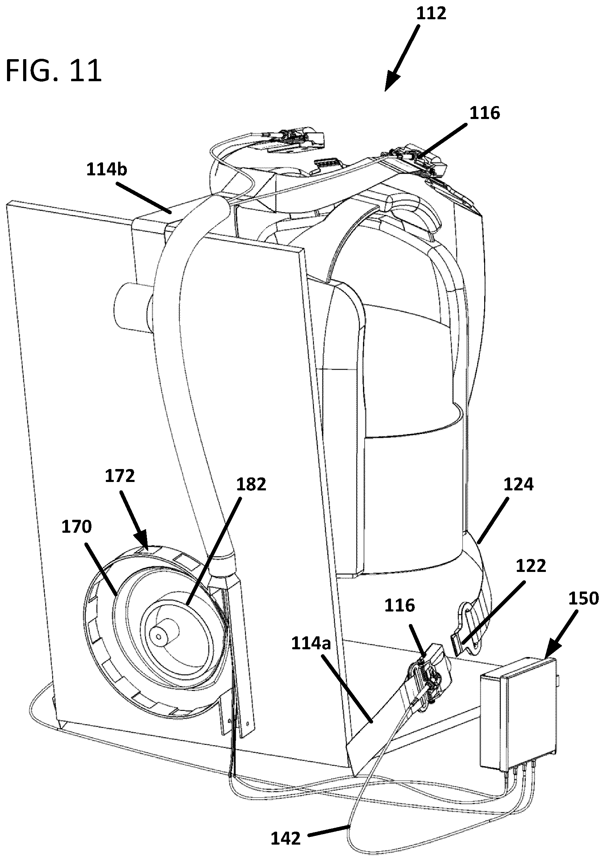

As shown in FIG. 11, the actuator cables 142 do not coil tightly along the drum 182. Rather, the coils of the actuator cables 142 move within the storage space 176 (e.g., loosen and tighten about the drum 182) as the extendable straps 114b and associated buckles 116 are moved between their retracted and extended positions. For example, when the extendable straps 114b are in the retracted position, the actuator cables 142 are loosely coiled about the drum 182 (e.g., see FIG. 11). As the extendable straps 114b are paid out, the buckles 116 move away from the seating rig 100 and the second ends of the actuator cables 142 move with the buckles 116. As the second ends of the actuator cables 142 pull away from the seating rig 100, a portion of the actuator cables 142 is paid out from the outlet 178 of the spool 172 while the storage coils 170 of the actuator cables 142 begin to tighten about the drum 182. When the extendable straps 114b are moved back towards their retracted position, the paid out length of the actuator cables 142 is pushed back into the spool 172 through the outlet 178 while the coils 170 loosen (e.g., move radially away from the drum 182 and closer to the outer wall 184).

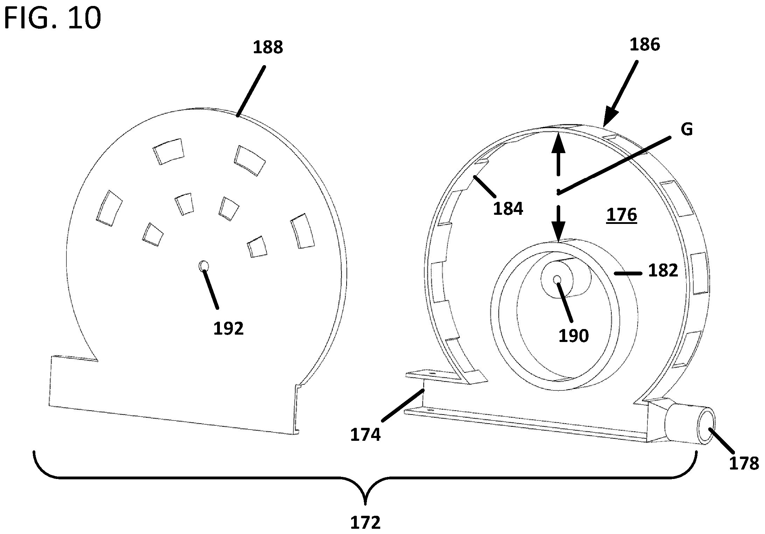

FIG. 10 shows an example payout spool 172 suitable for use with the actuator cable 142. In the example shown, the spool 172 includes a two-part housing 186, 188. Other configurations are possible. In certain examples, a first part 186 of the housing includes a fastener mount 190 that aligns with a fastener aperture 192 of a second part 188 of the housing. A fastener can extend therethrough to secure the first and second housing parts 186, 188 together. In certain examples, the inlet 174 and outlet 178 align along a linear axis. In certain examples, the linear axis is tangential to the storage space 176 within the spool 172.

In certain implementations, a conduit 194 may extend from the outlet 178 of the spool 172 to further manage the actuator cables 142 as the actuator cables 142 extend along the seating rig 100 towards the extendable straps 114b and respective buckles 116. For example, the conduit 194 may inhibit snagging of or other interference with the actuator cables 142 during movement of the user. In certain examples, the conduit 194 is flexible along its length. In certain examples, the conduit 194 is axially fixed to the outlet 178 of the spool 172.

Examples implementations of the seat restraint system 110 are disclosed in the following aspects of the disclosure:
Aspect 1. A seat restraint system for a seating rig, the seat restraint system comprising:
   a plurality of buckles disposed at separate locations about the seating rig, each buckle including a respective release mechanism;
   an actuator disposed at the seating rig, the actuator including an interface member; and
   a plurality of actuator cables each extending between opposite first and second ends, the first end of each actuator cable being disposed at the actuator, and the second end of each actuator cable being disposed at a respective one of the buckles;
   wherein movement of the interface member of the actuator is transferred along all of the actuator cables to the release mechanisms of the respective buckles to simultaneously actuate the release mechanisms.
Aspect 2. The seat restraint system of aspect 1, wherein each actuator cable includes a wire disposed within a sheath, the wire being movable relative to the sheath.
Aspect 3. The seat restraint system of aspect 2, wherein the seat restraint system has an operating mode and a restraining mode, wherein at least a first of the buckles is movable relative to the seat when the seat restraint system is configured in the operating mode; and wherein the first buckle is fixed relative to the seat when the seat restraint system is configured in the restraining mode.
Aspect 4. The seat restraint system of aspect 3, further comprising:
   a cable reel having a drum housing, a drum disposed within an interior of the drum housing, an entrance leading to the interior of the drum housing, and an exit leading from the interior of the drum housing, wherein an inner surface of the interior of the drum housing is radially offset from an exterior surface of the drum by a radial gap, wherein the radial gap is at least twice as large as a cross-dimension of the sheath of one of the actuator cables.
Aspect 5. The seat restraint system of aspect 4, wherein the sheath of a first of the actuator cables extends into the drum housing through the entrance, winds around the drum in a single loop, and extends out of the exit of the drum housing.
Aspect 6. The seat restraint system of aspect 5, wherein a portion of the sheath of the first actuator cable is attached to the entrance to the drum housing to remain fixed relative to the drum housing; and wherein another portion of the sheath is attached to the first buckle to move in unison with the first buckle relative to the seat.
Aspect 7. The seat restraint system of aspect 4, wherein the radial gap is at least five times as large as the cross-dimension of the sheath.
Aspect 8. The seat restraint system of aspect 4, wherein the radial gap is at least ten times as large as the cross-dimension of the sheath.
Aspect 9. The seat restraint system of any of the above aspects, wherein the seat is configured for a helicopter.
Aspect 10. The seat restraint system of any of aspects 1-8, wherein the seat is configured for an automobile.
Aspect 11. The seat restraint system of any of the above aspects, further comprising a vest that is separate from the seat, the vest including a plurality of latch plates, each latch plate being positioned and configured to be inserted into and held by a respective one of the buckles.
Aspect 12. A method of using a seat restraint, the method comprising:
   donning a vest including a plurality of latch plates;
   sitting in a seating rig that includes a plurality of buckles and a release actuator;
   inserting each latch plate of the plurality of latch plates into a respective buckle of a plurality of buckles; and
   actuating the release actuator to simultaneously release all of the latch plates from the buckles.
Aspect 13. The method of aspect 12, wherein actuating the release actuator includes pressing an interface member.
Aspect 14. The method of aspect 12, wherein actuating the release actuator includes pulling an interface member.
Aspect 15. The method of aspect 12, further comprising leaning forward in the seating rig to move a first of the buckles relative to the seat without releasing the respective latch plate of the first buckle.
Aspect 16. A seat restraint system for a seating rig, the seat restraint system comprising:
   a buckle disposed at the seating rig, the buckle including a release mechanism, the buckle being selectively movable relative to the seating rig;
   an actuator disposed at the seating rig, the actuator including an interface member;
   a actuator cable including a sheath surrounding a wire, the sheath extending between opposite first and second sheath ends, and the wire extending between opposite first and second wire ends, the first wire end being disposed at the actuator, and the second wire end being operationally coupled to the release mechanism of the buckle, and wherein the second sheath end is attached to the buckle to move in unison with the buckle relative to the seating rig; and
   a cable reel arrangement disposed at the seating rig, wherein a portion of the actuator cable extends through the cable reel arrangement, and wherein part of the sheath is attached to the cable reel to remain fixed relative to the cable reel.
Aspect 17. The seat restraint system of aspect 16, wherein the cable reel arrangement includes a drum housing, a drum disposed within an interior of the drum housing, an entrance leading to the interior of the drum housing, and an exit leading from the interior of the drum housing.
Aspect 18. The seat restraint system of aspect 17, wherein an inner surface of the interior of the drum housing is radially offset from an exterior surface of the drum by a radial gap, wherein the radial gap is at least twice as large as a cross-dimension of the sheath.
Aspect 19. The seat restraint system of aspect 17, wherein the sheath of the actuator cable extends into the drum housing through the entrance, winds around the drum in a single loop, and extends out of the exit of the drum housing.
Aspect 20. The seat restraint system of any of aspects 16-19, wherein the cable reel arrangement also includes a conduit extending from the exit of the cable reel towards the buckle.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A seat restraint system for a seating rig, the seat restraint system comprising:
a plurality of buckles disposed at separate locations about the seating rig, each buckle including a respective release mechanism;
an actuator disposed at the seating rig, the actuator including an interface member; and
a plurality of actuator cables each extending between opposite first and second ends, the first end of each actuator cable being disposed at the actuator, and the second end of each actuator cable being disposed at a respective one of the buckles;
wherein movement of the interface member of the actuator is transferred along all of the actuator cables to the release mechanisms of the respective buckles to simultaneously actuate the release mechanisms.

2. The seat restraint system of claim 1, wherein each actuator cable includes a wire disposed within a sheath, the wire being movable relative to the sheath.

3. The seat restraint system of claim 2, wherein the seat restraint system has an operating mode and a restraining mode, wherein at least a first of the buckles is movable relative to the seat when the seat restraint system is configured in the operating mode; and wherein the first buckle is fixed relative to the seat when the seat restraint system is configured in the restraining mode.

4. The seat restraint system of claim 3, further comprising:
a cable reel having a drum housing, a drum disposed within an interior of the drum housing, an entrance leading to the interior of the drum housing, and an exit leading from the interior of the drum housing, wherein an inner surface of the interior of the drum housing is radially offset from an exterior surface of the drum by a radial gap, wherein the radial gap is at least twice as large as a cross-dimension of the sheath of one of the actuator cables.

5. The seat restraint system of claim 4, wherein the sheath of a first of the actuator cables extends into the drum housing through the entrance, winds around the drum in a single loop, and extends out of the exit of the drum housing.

6. The seat restraint system of claim 5, wherein a portion of the sheath of the first actuator cable is attached to the entrance to the drum housing to remain fixed relative to the drum housing; and wherein another portion of the sheath is attached to the first buckle to move in unison with the first buckle relative to the seat.

7. The seat restraint system of any of claims 4 to 6, wherein the radial gap is at least five times as large as the cross-dimension of the sheath.

8. The seat restraint system of any of the above claims, wherein the seat is configured for a helicopter.

9. The seat restraint system of any of claims 1-7, wherein the seat is configured for an automobile.

10. The seat restraint system of any of the above claims, further comprising a vest that is separate from the seat, the vest including a plurality of latch plates, each latch plate being positioned and configured to be inserted into and held by a respective one of the buckles.

11. A method of using a seat restraint, the method comprising:
donning a vest including a plurality of latch plates;
sitting in a seating rig that includes a plurality of buckles and a release actuator;
inserting each latch plate of the plurality of latch plates into a respective buckle of a plurality of buckles; and
actuating the release actuator to simultaneously release all of the latch plates from the buckles.

12. The method of claim 11, wherein actuating the release actuator includes pressing an interface member.

13. The method of claim 11, wherein actuating the release actuator includes pulling an interface member.

14. The method of claim 11, further comprising leaning forward in the seating rig to move a first of the buckles relative to the seat without releasing the respective latch plate of the first buckle.

15. The seat restraint system of claim 1, further comprising:
an actuator cable of the plurality of actuator cables including a sheath surrounding a wire, the sheath extending between opposite first and second sheath ends, and the wire extending between opposite first and second wire ends, the first wire end being disposed at the actuator, and the second wire end being operationally coupled to the release mechanism of the buckle, and wherein the second sheath end is attached to the buckle to move in unison with the buckle relative to the seating rig; and
a cable reel arrangement disposed at the seating rig, wherein a portion of the actuator cable extends through the cable reel arrangement, and wherein part of the sheath is attached to the cable reel to remain fixed relative to the cable reel.
